Europäisches Patentamt

European Patent Office

Office européen des brevets

(19)

(11) EP 0 602 695 B1

(12) EUROPEAN PATENT SPECIFICATION

(45) Date of publication and mention
of the grant of the patent:
**04.03.1998 Bulletin 1998/10**

(51) Int Cl.⁶: **F16P 3/14**, H02H 5/12,
H02H 7/20, H02H 3/00

(21) Application number: **93203197.4**

(22) Date of filing: **16.11.1993**

(54) **Inherent-security comparator device, particularly for optoelectronic barriers**

Komparatorvorrichtung mit Eigensicherheit insbesondere für opto-elektronische Schranken

Dispositif comparateur avec securité intrinsèque, particulièrement pour barrières opto-électroniques

(84) Designated Contracting States:
**DE ES FR GB**

(30) Priority: **03.12.1992 IT TO920284 U**
**06.04.1993 IT TO930232**

(43) Date of publication of application:
**22.06.1994 Bulletin 1994/25**

(73) Proprietor: **REER S.p.A.**
**I-10153 Torino (IT)**

(72) Inventor: **Mirandola, Francesco**
**I-10093 Collegno (Torino) (IT)**

(74) Representative: **Spandonari, Carlo, Dr. Ing.**
**corso Re Umberto 56**
**10128 Torino (IT)**

(56) References cited:
**EP-A- 0 230 517**       **EP-A- 0 371 317**
**DE-B- 2 007 840**       **DE-B- 2 215 136**
**DE-C- 2 451 100**       **DE-C- 2 753 571**
**DE-C- 2 827 863**

## Description

This invention is concerned with an inherent-security comparator device for analog and/or digital signals, for application in security systems such as optoelectronic barriers and the like.

When two analog signals are compared in a comparator to check their identity, it may happen that a breakdown in a part of the comparator circuit gives rise to a wrong report, whereby different signals are reported to be identical, or vice versa. While this occurrence is a source of damage in any application, it is absolutely unacceptable in protection systems on which the safety of human beings may depend. An example of this is found in optoelectronic barriers, which are often placed to guard potentially dangerous machines such as presses and the like.

As known, optoelectronic barriers comprise a raster of infrared light rays hitting associated light receivers. The interruption or attenuation of any one ray, e.g. caused by the operator's hand, should give rise to an immediate stop of the operation of the machine. To such purpose, the analog signals output by said light receivers are constantly compared with a reference signal in a comparator circuit, and any deviation from identity is interpreted as a violation of the barrier. Consequently, a breakdown in any of the light receivers is in itself no cause of harm to people, because it will be interpreted as a violation of the barrier and will only cause the machine to stop. However, if the comparator circuit, because of an internal breakdown, should wrongly report two different signals to be identical, the consequences could be catastrophic.

The main object of the invention is now to provide a comparator device for analog signals which is endowed with inherent security, particularly for optoelectronic barriers, and which will emit an output signal showing two analog input signals to be identical, and which will stop emitting the output signal not only in case of unequality of the two analog signals, but also in case of any malfunction of its internal components or of its supply.

This object is known from EP-A-0 230 517.

High-security signal processing systems as above are generally designed with the inclusion of a redundance consisting, for example, in using two identical processing channels, both of which process the same starting signal: the final outputs as well as chosen intermediate points of both channels are constantly checked for identity. However, such checking of multiple homologue signals requires, in principle, a plurality of comparators, whose outputs are multiplexed in cascade in order to obtain a single overall identity signal for the entire system which is to be monitored. This involves the need for a complex set of circuits, which is added to the burden of the twofold processing channel.

It is therefore a further object of the invention to provide an inherent-security comparator device which can compare several pairs of input signals and deliver a single relieving output signal.

The above objects, as well as other objects and advantages such as will appear from the following disclosure, is achieved by the invention with an inherent-security comparator device for analog signals, having the features recited in claim 1.

The invention will now be described in more detail, with reference to preferred embodiments which are given by way of an illustrative, nonlimiting example and are shown in the attached drawings, wherein:

Fig. 1 is a diagram of an inherent-security comparator circuit according to the invention;

Fig. 2 is a block diagram of an inherent-security signal comparator having multiple channels, according to the invention;

Fig. 3 is a set of diagrams showing the operation of the comparator of Fig. 2; and

Fig. 4 is a diagram of a modification of the comparator of Fig. 2.

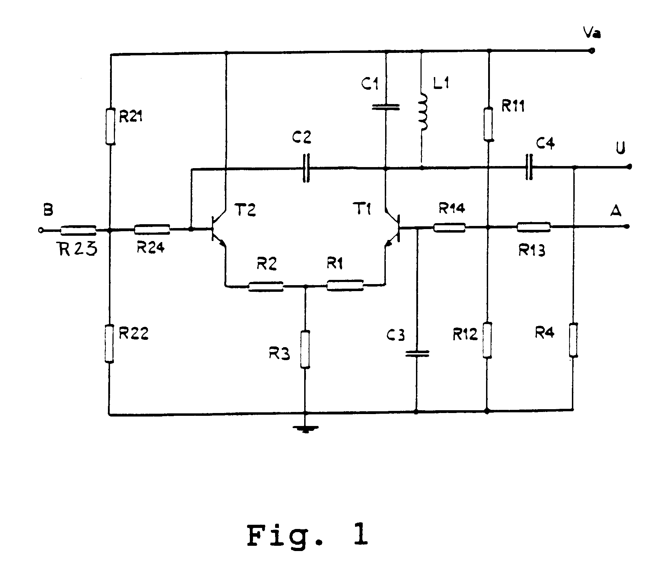

With reference to Fig. 1, the comparator of the invention comprises two similar bipolar transistors T1 and T2, whose emitters, through respective identical resistors R1 and R2, are tied to a common resistor R3, itself grounded. The collector of transistor T1 is tied to a supply voltage Va thru a resonator comprising an inductor L1 and a capacitor C1 in parallel; the collector of transistor T2 is directly connected to the supply. Moreover, the collector of transistor T1 is connected in positive feedback to the base of transistor T2 through a capacitor C2.

The analog signals which must be compared are applied to inputs A and B, which transfer the signals to the respective bases of the two transistors T1, T2, via respective matching networks comprising resistors R11, R12, R13, R14, and, respectively, R21, R22, R23, R24. Moreover, a capacitor C3 leads from the base of transistor T1 to ground, thus forming a low-pass filter with resistor R14.

The output signal from the circuit is delivered from the collector of transistor T1 through a high-pass filter comprising a capacitor C4 and a resistor R4.

When identical analog signals are present at the inputs A and B of the above described comparator circuit, both transistors T1 and T2 are biased to identical states of conduction, and the circuit oscillates, due to resonator L1, C1 and to the feedback capacitor C2.

In fact, as far as the high frequency signal is concerned, transistor T2 behaves as an emitter follower delivering its output across common resistor R3. Transistor T1 behaves as a common-base stage, because capacitor C3 keeps its base stationary with respect to the high frequency. It can be easily seen that, for the high frequency signal, the phase lag of the feedback loop from the collector of transistor T1 back through both stages T2 and T1 is 360°. Voltage dividers R11, R12 and R21, R22 are chosen to bias the transistors so that they provide a loop gain greater than 1 for the high frequency, when the signals at the inputs A and B are equal. In these circumstances, a high frequency output signal appears on terminal U, which signal can be used by the following circuits (not shown) as an indication that the input signals are equal. The purpose of resistors R1 and R2 is to create a current feedback to stabilize and equalize the operation of the transistors.

The frequency of oscillation (and, consequently, the frequency of the output signal) is preferably in the range of 5 MHz, but other values may be chosen, e.g. 50 kHz to several MHz.

The circuit continues to oscillate even if the amplitude of both input signals changes, provided that it does so within a prescribed range and equally and synchronously for both signals. In this case, the high frequency output signal can vary in amplitude, but will continue to exist.

However, the conditions for the circuit oscillation will fail if any of the input signals vanishes or is appreciably reduced with respect to the other, because this circumstance will remove the biasing from its associated transistor.

Resistor R3 sets the comparator tolerance to the amplitude difference between the two input signals. The smaller the resistance, the greater the tolerance, or acceptation window, of the comparator. As the resistance increases, the window is narrowed. The upper limit for R3 is the impedance value of resonator C1, L1 at resonance, because under these circumstances the loop gain, considering the circuit losses, becomes less than 1.

It can be easily seen that the oscillation of the above circuit is also turned off by any breakdown or malfunction arising in any of its components or of the circuit parameters. For example, a short, interruption or alteration of any of resistors R11, R12, R21 or R22 will give rise to an unbalance of the signals at the emitters of transistors T1 and T2, with consequent cutoff of the oscillations. The same is true for a breakdown of any of the transistors. In all cases, the collector of transistor T1 will be brought to a constant voltage, of a value ranging from 0 V to the supply voltage Va, depending on the nature of the breakdown. Since the circuit downstream of the comparator is only sensitive to the above oscillatory signal, such constant voltages have no meaning and are ignored. Similarly, a short or interruption of any of capacitors C1, C2 or C3 obviously causes the alternate signal to be inhibited. In general, the person skilled in the art can easily see that whatever malfunction will inevitably lead to a stop in the oscillation of the circuit.

There is, however, one type of breakdown that would be pernicious to the operation of the comparator, and this is a short or a reduction of value of resistance R3. Accordingly, for this resistance a metal-film resistor (or other equivalent) is preferably used; for this type of resistor, as known, the norms contemplate only its interruption, or the increase of its value, as a possible malfunction. However, as shown above, the consequence of an increase in the value of this resistance is only a tightening of the comparator tolerance. Such consequence is obviously acceptable.

It should be understood that the expression "analog signals", in the context of the comparator of the invention, also covers the special class of signals usually called digital, since a digital signal is merely an analog signal for which, by convention, amplitude changes are only meaningful when they cross predetermined thresholds. In other words, the above described comparator is not limited to comparison of analog signals in a restricted sense.

Further, although bipolar transistors are used in the preferred embodiment of the invention, other types of transistors, such as FETs, could also be used, or indeed more complex structures such as transistor assemblies or integrated circuits, in which a current flowing through a conduction channel can be modulated by means of a current or voltage applied to a control electrode. The term "transistor" as used in the claims is intended to refer to any solid-state device having a first and a second electrode, such as an emitter and a collector, or a source and a drain, between which a current can flow while being modulated by a voltage or current applied to a third, or control, electrode, such as a base, a gate, or the like.

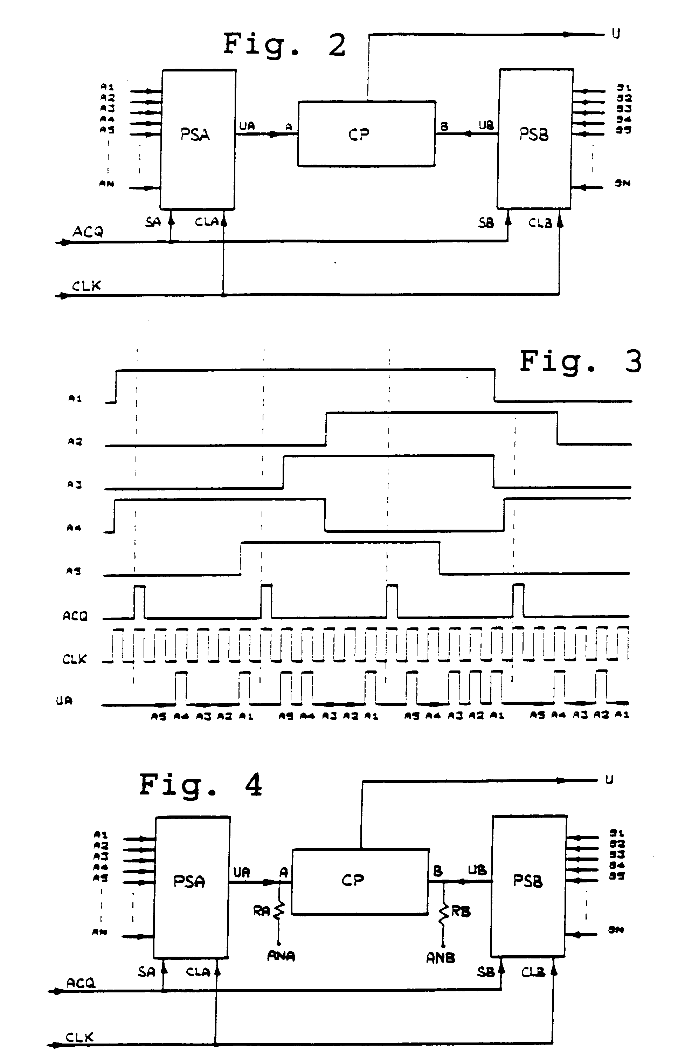

A development of the invention will now be described with reference to Fig. 2. In this Figure, CP is a single-channel, comparator for analog signals, as described and shown Fig. 1.

A first parallel/serial converter PSA has a parallel or multiple input comprising a plurality of lines A1, A2, A3 ..., AN and one serial output UA. A second parallel/ serial converter PSB also has a parallel or multiple input comprising a plurality of lines B1, B2, B3, ..., BN and one serial output UB. The two outputs UA and UB are respectively connected to the inputs A and B of comparator CP.

The two parallel/serial converters PSA and PSB further have respective conversion control inputs SA, SB, by means of which each conversion is initiated. Input SA is controlled by a line ACQA, while input SB is controlled by a line ACQB. For both converters to simultaneously start the conversion of their respective multiple inputs, the control signals applied through lines ACQA, ACQB must be synchronized. In other words, at each pulse on lines ACQA, ACQB, each converter latches the data in parallel format on its multiple input A1-AN or B1-BN, and then delivers the data in serial format on output UA or UB, respectively. When the pulse on line ACQ returns to 0, each converter begins to deliver the serial data on its output.

In order to synchronously set the rate of the serial output signals from both converters, two clock lines, CLKA, CLKB are connected to respective clocking inputs CLA, CLB of the two converters. The two clock lines are also kept synchronous by known means not shown.

The parallel/serial converters described above are well known in the art and are also available as integrated circuits. A converter suitable for use in the present invention is, for instance, the integrated circuit CD 4014 BC, as marketed by the US company National Semiconductor Corporation.

In order to put the above described circuit to service in multiple comparison with inherent security, the interval between one conversion and the next must be set so that each signal A1-AN (and therefore also B1-BN) is sampled at least once during its variation period. It is therefore necessary to determine the duration TP of the shortest period of the signals under investigation, and set the priod TC of the sampling sontrol signals CLKA and CLKB so that, if N is the number of the signals under monitoring, the following relationship is satisfied:

$$TC \leq TP/(N + 2). \qquad (1)$$

The diagrams of Fig. 3 will give a better understanding of the operation of the device disclosed above. Five digital signals A1, A2, A3, A4 and A5 change their levels (0 or 1) in the course of time: e.g., A1 is shown at a high level for a duration almost double than the high levels of each of the other signals A2 to A5. It is assumed, however, that the nature of signals A1 to A5 makes it possible to consider it impossible that any of the signals can ever change with a period shorter than a value TP.

The clock signal period CLK should be equal to TC/(N + 2), in this case TC/7. The conversion enabling signals ACQA, ACQB are chosen with a period TI (interval between two successive pulses) which satifies the relationship:

$$TI = N \cdot TC.$$

The lowest diagram shows the serialized signal UA.

Obviously, if comparator CP compares at every instant signal UA of Fig. 3 with a signal UB not shown, obtained from signals B1 to BN which are nominally equal to A1 to AN (i.e., obtained, for instance, from an identical circuit channel within the redundance stated above), a final signal U from the comparator CP which shows even fleetingly a disequality bteween UA and UB will mean that at least one of signals A1 to AN is not equal to its homologue, and will therefore be an indication of a malfunction.

In case of a breakdown in any of the two converters PSA, PSB, a difference will obviously arise between one or more of signals A1 to AN and the corresponding signals B1 to BN, and the difference will be reported in output U from comparator CP. A breakdown in comparator CP itself, by definition of an inherent-security unit, will manifest itself in the same way. Therefore the circuit disclosed will behave, overall, as an inherent-security comparator for multiple digital signals.

However, the circuit described above could also be modified to be used, in a limited way, also for monitoring analog signals, in addition to the digital signals. This application will now be described with reference to Fig. 4.

If one considers that CP is an analog comparator, two analog signals ANA and ANB are applied to inputs A and B of CP thru respective resistances RA, RB, in "analog OR" combination with the serialized signals UA and UB. Comparator CP will then deliver a normal output signal only if both overall envelopes applied to its inputs are identical at every instant. Also in this case, an anomaly in any of the input signals, both digital and analog, will give rise to an unbalance, which will be reported on output U.

## Claims

1. An inherent-security signal comparator device, particularly for optoelectronic barriers, characterized in that it comprises:

   - a first transistor (T1) having a control electrode connected to a first main input (A) for a first input signal and a collector connected to a first fixed voltage (Va) through a resonator (L1, C1), and

   - a second transistor (T2) having a control electrode connected to a second main input (B) for a second input signal to be compared with said first input signal and a collector directly connected to said first fixed voltage,

   in that the emitters of both transistors are connected to each other and to a second fixed voltage through a common resistor (R3),
   and in that the collector of the first transistor is connected to the control electrode of the second transistor by way of a capacitive coupling (C2), the collector of the first transistor being the output (U) of the comparator.

2. The comparator device of claim 1, characterized in that a capacitor (C3) is connected between the control electrode of the first transistor (T1) and one of said fixed voltages.

3. The comparator device of claim 1 or 2, characterized in that it further comprises a low-pass filter (C4, R4) connected to the collector of the first transistor (T1).

4. The comparator device of any of claims 1 to 3, characterized in that said inputs (A, B) are connected to the control electrodes of the two transistors through respective matching networks (R11, R12, R13, R14; R21, R22, R23, R24).

5. The comparator device of claim 4, characterized in that said matching networks are resistive networks.

6. The comparator device of any of claims 1 to 5, characterized in that the emitters of the two transistors are connected to said common resistor (R3) through respective resistors (R1, R2).

7. The comparator device of any of claims 1 to 6, characterized in that said common resistor (R3) is a metal-film resistor.

8. The comparator device of any of claims 1 to 7, characterized in that said resonator comprises an inductor (L1) and a capacitor (C1) connected in parallel.

9. The comparator device of any of claims 1 to 8, characterized in that it further comprises first and second parallel/serial converters (PSA, PSB), each having a respective parallel input (A1 to AN, B1 to BN) for homologously receiving the signals under monitoring, and each having a single output line (UA, UB) leading to one of the two main inputs (A, B), the two converters being controlled by respective conversion enabling signals (ACQA, ACQB) which are synchronized with each other and which have a period shorter than the shortest period of the signals under monitoring divided by the number of signals under monitoring plus 2.

10. The comparator device of claim 9, characterized in that said two parallel/serial converters (PSA, PSB) are further controlled by respective clock signals (CLKA, CLKB) synchronized with each other, and which set the rate of the serial output data.

11. The comparator device of claim 9 or 10, characterized in that it further comprises two supplementary inputs (ANA, ANB) for analog signals under monitoring, which are connected in OR combination to the main inputs (A, B).

**Patentansprüche**

1. Komparatorvorrichtung mit Eigensicherheit, insbesondere für optoelektronische Schranken, dadurch gekennzeichnet, daß sie umfaßt:

   - einen ersten Transistor (T1), der eine mit einem ersten Haupteingang (A) für ein erstes Eingangssignal verbundene Steuerelektrode und einen durch einen Resonator (L1, C1) mit einer ersten festen Spannung (Va) verbundenen Kollektor aufweist, und

   - einen zweiten Transistor (T2), der eine mit einem zweiten Haupteingang (B) für ein zweites, mit dem ersten Eingangssignal zu vergleichendes Eingangssignal verbundene Steuerelektrode und einen mit der ersten festen Spannung (Va) unmittelbar verbundenen Kollektor aufweist,

dadurch, daß die Emitter beider Transistoren miteinander und mit einer zweiten festen Spannung durch einen gemeinsamen Widerstand (R3) verbunden sind,
und dadurch, daß der Kollektor des ersten Transistors mit der Steuerelektrode des zweiten Transistors durch eine kapazitive Kopplung (C2) verbunden ist, wobei der Kollektor des ersten Transistors der Ausgang (U) des Komparators ist.

2. Komparatorvorrichtung nach Anspruch 1, dadurch gekennzeichnet, daß ein Kondensator (C3) zwischen der Steuerelektrode des ersten Transistors (T1) und eine der festen Spannungen verbunden ist.

3. Komparatorvorrichtung nach Anspruch 1 oder 2, dadurch gekennzeichnet, daß sie weiter einen mit dem Kollektor des ersten Transistors (T1) verbundenen Tiefpaßfilter (C4, R4) aufweist.

4. Komparatorvorrichtung nach einer der Ansprüche 1 bis 3, dadurch gekennzeichnet, daß die obengenannten Eingänge (A,B) mit den Steuerelektroden der beiden Transistoren durch jeweilige Anpassungsschaltungen (R11, R12, R13, R14; R21, R22, R23, R24) verbunden sind.

5. Komparatorvorrichtung nach Anspruch 4, dadurch gekennzeichnet, daß die Anpassungsschaltungen Widerstandsschaltungen sind.

6. Komparatorvorrichtung nach einer der Ansprüche 1 bis 5, dadurch gekennzeichnet, daß die Emitter der beiden Transistoren mit dem gemeinsamen Widerstand (R3) durch jeweilige Widerstände (R1, R2) verbunden sind.

7. Komparatorvorrichtung nach einer der Ansprüche 1 bis 6, dadurch gekennzeichnet, daß der gemeinsame Widerstand (R3) ein Metallwiderstand ist.

8. Komparatorvorrichtung nach einer der Ansprüche 1 bis 7, dadurch gekennzeichnet, daß der obengenannte Resonator eine Drossel (L1) und einen Kondensator (C1) umfaßt, die miteinander verbunden sind.

9. Komparatorvorrichtung nach einer der Ansprüche 1 bis 8, dadurch gekennzeichnet, daß sie weiter einen ersten und einen zweiten Parallel-Reihen-Umsetzer (PSA, PSB) umfaßt, die je einen Paralleleingang (Al bis AN, B1 bis BN) für den Homologempfang von den zu prüfenden Signalen aufweist, und die je eine einzige, zu einem der beiden Haupteingänge (A, B) leitende Ausgangslinie (UA, UB) aufweist, wobei die beiden Umsetzer von jeweiligen umsetzungsauslösenden Signalen (ACQA, ACQB) gesteuert werden, die miteinander synchronisiert sind und die eine Periode aufweisen, die kürzer ist als die kürzeste Periode der zu prüfenden Signalen geteilt durch die Zahl von zu prüfenden Signalen plus 2.

10. Komparatorvorrichtung nach Anspruch 9, dadurch gekennzeichnet, daß die zwei Parallel-Reihen-Umsetzer (PSA, PSB) ferner von jeweiligen Uhrsignalen (CLKA, CLKB) gesteuert werden, die miteinander synchronisiert sind, und die den Takt der seriellen Ausgangsdaten bestimmen.

11. Komparatorvorrichtung nach Anspruch 9 oder 10, dadurch gekennzeichnet, daß sie weiter zwei Hilfseingänge (ANA, ANB) für zu vergleichende analoge Signale, wobei die zwei Hilfseingänge in OR-Schaltung mit den Haupteingängen geschaltet sind.

**Revendications**

1. Dispositif comparateur de signaux avec sécurité intrinsèque, particulièrement pour barrières opto-électroniques, caractérisé en ce qu'il comprend:

   - un premier transistor (T1) ayant une électrode de contrôle reliée à une première entrée principale (A) pour un premier signal d'entrée et un collecteur relié à une première tension fixe (Va) par voie d'un résonateur (L1, C1), et

   - un deuxième transistor (T2) ayant une électrode de contrôle reliée à une deuxième entrée principale (B) pour un deuxième signal d'entrée à comparer avec ledit premier signal d'entrée et un collecteur relié directement à ladite première tension fixe,

   en ce que les émetteurs des deux transistors sont reliés entre eux et à une deuxième tension fixe par voie d'un resisteur commun (R3), et en ce que le collecteur du premier transistor est relié à l'électrode de contrôle du deuxième transistor par voie d'un couplage capacitif (C2), le collecteur du premier transistor étant la sortie (U) du comparateur.

2. Comparateur selon la revendication 1, caractérisé en ce qu'entre l'électrode de contrôle du premier transistor (T1) et une desdites tensions fixes est branché un condensateur (C3).

3. Comparateur selon la revendication 1 ou 2, caractérisé en ce qu'il comprend en outre un filtre passe-bas (C4, R4) relié au collecteur du premier transistor (T1).

4. Comparateur selon une des revendications 1 à 3, caractérisé en ce que lesdites entrées (A, B) sont reliées aux électrodes de contrôle des deux transistors par voie de réseaux adaptateurs respectifs (R11, R12, R13, R14; R21, R22, R23, R24).

5. Comparateur selon la revendication 4, caractérisé en ce que lesdits réseaux adaptateurs sont des réseaux de résistances.

6. Comparateur selon une des revendications 1 à 5, caractérisé en ce que les émetteurs des deux transistors sont reliés audit resisteur commun (R3) par voie de résisteurs respectifs (R1, R2).

7. Comparateur selon une des revendications 1 à 6, caractérisé en ce que ledit résisteur commun (R3) est un résisteur à film métallique.

8. Comparateur selon une des revendications 1 à 7, caractérisé en ce que ledit résonateur comprend un inducteur (L1) et un condensateur (C1) reliés en parallèle.

9. Comparateur selon une des revendications 1 à 8, caractérisé en ce qu'il comprend en outre un premier et un deuxième convertisseur parallèle/ sériel (PSA, PSB), ayant chacun une entrée parallèle respective (A1 à AN, B1 à BN) pour recevoir homologuement les signaux sous monitorage, et ayant chacun une ligne de sortie unique (UA, UB) qui conduit à une des deux entrées principales (A, B), les deux convertisseurs étant contrôlés par des respectifs signaux de déclenchement de conversion (ACQA, ACQB) qui sont synchronisés entre eux et qui ont une période plus brève que la plus brève période des signaux sous monitorage divisée par le nombre de signaux sous monitorage plus 2.

10. Comparateur selon la revendication 9, caractérisé en ce que les deux convertisseurs parallèle/sériel (PSA, PSB) sont en outre contrôlés par respectifs signaux d'horloge (CLKA, CLKB) qui sont synchronisés entre eux et qui établissent la cadence des données de sortie sérielle.

11. Comparateur selon la revendication 9 ou 10, caractérisé en ce qu'il comprend en outre deux entrées supplémentaires (ANA, ANB) pour signaux analogues à monitorer, lesquelles sont reliées en combinaison OU avec les entrées principales (A, B).

Fig. 1

# Fig. 2

# Fig. 3

# Fig. 4